# EUROPÄISCHE PATENTSCHRIFT

(11) **EP 0 812 799 B1**
(45) Veröffentlichungstag und Bekanntmachung des Hinweises auf die Patenterteilung: **05.12.2001**
(21) Anmeldenummer: 97109317.4
(22) Anmeldetag: 09.06.1997
(51) Int. Cl.: B66F 9/20, B62D 51/00

(54) **Bedienelement für ein deichselgelenktes Flurförderzeug**
Control element for industrial truck guided by a towbar
Elément de contrôle pour chariot de manutention guidé par timon

(30) Priorität: 14.06.1996 DE 19623792
(43) Veröffentlichungstag der Anmeldung: 17.12.1997
(73) Patentinhaber: Still Wagner GmbH & Co. KG, 72760 Reutlingen (DE)
(72) Erfinder: Prinz, Eugen, 72760 Reutlingen (DE); Nedele, Hartmut, 74555 Metzingen (DE)
(74) Vertreter: Kasseckert, Rainer

(56) Entgegenhaltungen:
- DE-B- 1 243 528
- FR-A- 2 130 506
- FR-A- 2 494 249
- GB-A- 1 117 603
- US-A- 4 164 121
- US-A- 4 444 284
- US-A- 5 313 027

## Beschreibung

Die Erfindung betrifft ein deichselgelenktes Flurförderzeug mit einem an einer Deichsel angeordneten Deichselkopf, welcher mindestens ein Bedienelement zur Erzeugung eines Steuersignals für die vertikale Bewegung eines Lastaufnahmemittels aufweist.

Bei deichselgelenkten Flurförderzeugen, beispielsweise Hochhubwagen oder Niederhubwagen, wird generell angestrebt, möglichst alle Bedienelemente zur Betätigung der verschiedenen Funktionen des Flurförderzeugs an dem Deichselkopf, in der Nähe der Handgriffe anzuordnen. Mit den Bedienelementen werden Steuersignale für die Hubfunktion des Lastaufnahmemittels erzeugt, die in der Regel in einer Steuereinheit weiterverarbeitet und anschließend dem entsprechenden Stellglied zugeführt werden.

Für die vertikale Bewegung eines Lastaufnahmemittels an einem Hubmast ist es erforderlich, das entsprechende Steuersignal über das Bedienelement feinfühlig und eindeutig einstellen zu können. Aus diesem Grund ist bei deichselgelenkten Hochhubwagen des Standes der Technik zur Steuerung der vertikalen Bewegung des Lastaufnahmemittels häufig ein Handhebel vorgesehen, der an einem Gehäuseteil des Flurförderzeugs angeordnet ist. Diese bekannten Handhebel weisen aufgrund ihrer Anordnung ergonomische Nachteile auf.

Aus der US 4 164 121 ist ein Flurförderzeug bekannt bei dem ein Handhebel in herkömmlicher Weise mit einem stufenlos einstellbaren, hydraulischen Wegeventil verbunden ist. Zusätzlich steht der Handhebel mit zwei elektrischen Schaltern derart in Wirkverbindung, daß in Abhängigkeit von der Auslenkung des Handhebels zunächst eine erste Hydraulikpumpe, bei stärkerer Auslenkung des Handhebels zusätzlich eine zweite Hydraulikpumpe eingeschaltet wird.

Ebenfalls bekannt sind Niederhubwagen, bei denen mittels mehreren Bedienelementen verschiedenen Hubhöhen einstellbar sind, die von der Bedienperson in Abhängigkeit von dem jeweiligen Einsatzfall, z.B. Transportfahrt oder Umladetätigkeit, gewählt werden können. Auch hierbei ist es wünschenswert, das entsprechende Steuersignal über das an dem Deichselkopf angeordnete Bedienelement feinfühlig und exakt vorgeben zu können.

Der vorliegenden Erfindung liegt die Aufgabe zugrunde, ein Flurförderzeug zur Verfügung zu stellen, bei dem mindestens zwei Werte für die Hubgeschwindigkeit oder für die Hubhöhe mittels eines an dem Deichselkopf angeordneten Bedienelement feinfühlig und eindeutig vorgegeben werden können.

Diese Aufgabe wird erfindungsgemäß dadurch gelöst, daß das Bedienelement mit einem ein diskretes Steuersignal erzeugenden zweistufigen oder mehrstufigen Schalter in Wirkverbindung steht, wobei jeder Schaltstellung des Schalters ein bestimmter Sollwert für die Vertikalgeschwindigkeit des Lastaufnahmemittels zugeordnet ist und die Vertikalgeschwindigkeit in zwei oder mehreren Stufen schaltbar ist.

Die Vertikalgeschwindigkeit des Lastaufnahmemittels kann somit in zwei oder mehreren Stufen geschaltet werden. Das Bedienelement mit dem Schalter ist an dem Deichselkopf angeordnet und kann gleichzeitig mit verschiedenen anderen Funktionen des Flurförderzeugs betätigt werden. Ausgehend von der Nullstellung des Schalters sind die verschiedenen Geschwindigkeitsstufen von der Bedienperson mit einem Finger exakt wählbar.

Die eingangs genannte Aufgabe wird erfindungsgemäß auch dadurch gelöst, daß das Bedienelement mit einem ein diskretes Steuersignal erzeugenden zweistufigen oder mehrstufigen Schalter in Wirkverbindung steht, wobei jeder Schaltstellung des Schalters ein bestimmter Sollwert für die vertikale Position des Lastaufnahmemittels zugeordnet ist.

Hierbei wird erfindungsgemäß mit dem zwei- oder mehrstufigen Schalter die gewünschte Hubhöhe für das Lastaufnahmemittel vorgegebenen. Bei Hochhubwagen können somit bestimmte, oft angefahrene Hubhöhen exakt eingestellt werden. Bei Niederhubwagen sind häufig ebenfalls zwei Hubhöhen vorgesehen, wobei für Umladearbeiten die erste Hubhöhe und für Transportfahrten die zweite Hubhöhe verwendet wird. Auch hier kann das Lastaufnahmemittel von der Bedienperson mit einem Finger der an dem Deichselkopf befindlichen Hand exakt gesteuert werden.

In einer besonders vorteilhaften Ausgestaltung der Erfindung sind die verschiedenen Schalterstufen in Abhängigkeit von einer auf eine Betätigungsfläche des Bedienelements wirkenden Betätigungskraft wählbar. Dabei entspricht jede Schalterstufe einer bestimmten Bandbreite für die aufzubringende Betätigungskraft, welche von der Bedienperson leicht eingehalten werden kann. Zum Schalten in eine höhere Schaltstufe muß die Betätigungskraft deutlich erhöht werden, so daß eine Fehlbedienung praktisch ausgeschlossen ist.

Mit besonderem Vorteil ist der Schalter als zweistufiger Schalter ausgeführt. Für die meisten Anwendungen bei Flurförderzeugen sind zwei Geschwindigkeitsstufen bzw. zwei Stufen für die Hubhöhe des Lastaufnahmemittels ausreichend. Der zweistufige Schalter stellt somit eine den Ansprüchen gerecht werdende, besonders einfache und kostengünstige Lösung dar.

Vorteilhaft ist es weiterhin, wenn das Bedienelement als Tastschalter ausgeführt ist. Bei einer Betätigung des Bedienelements bewegt sich dessen Betätigungsfläche in Richtung der mit einem Finger ausgeübten Betätigungskraft.

Weiter Vorteile und Einzelheiten der Erfindung werden anhand der in den schematischen Figuren dargestellten Ausführungsbeispiele näher erläutert. Dabei zeigt
- Figur 1: ein gattungsgemäßes Flurförderzeug (Hochhubwagen),
- Figur 2: ein gattungsgemäßes Flurförderzeug (Niederhubwagen) und
- Figur 3: einen erfindungsgemäßen Deichselkopf.

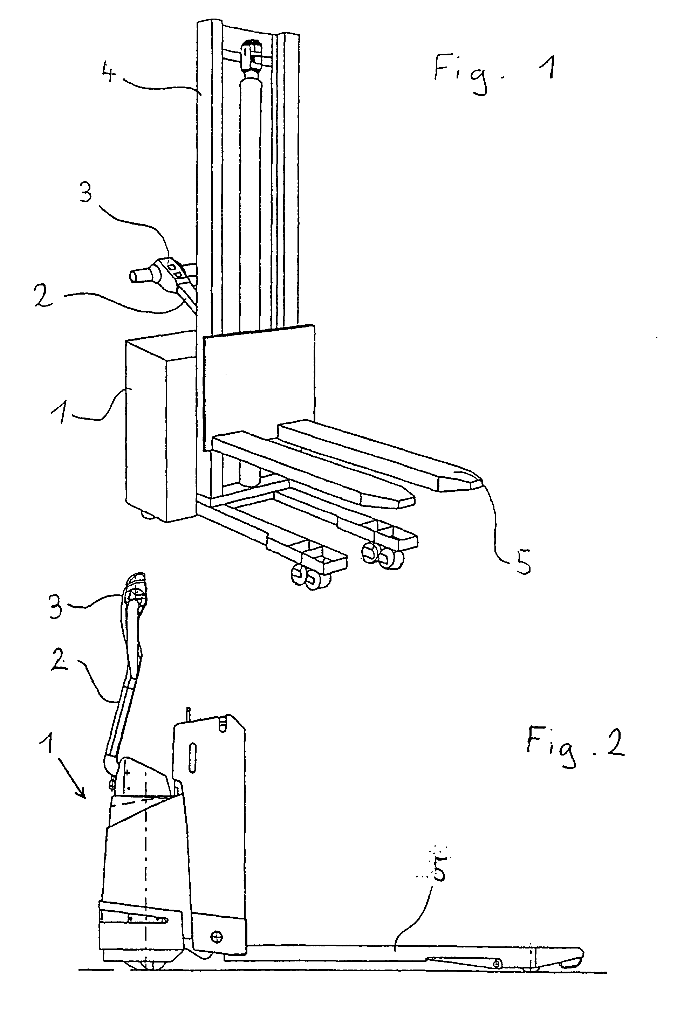

In Figur 1 ist als gattungsgemäßes deichselgeführtes Flurförderzeug ein Hochhubwagen dargestellt. An einem Gehäuseteil 1 des Flurförderzeugs ist eine Deichsel 2 zum Lenken des Flurförderzeugs angeordnet, die einen Deichselkopf 3 mit verschiedenen Bedienelementen aufweist. An einem Hubmast 4 ist ein als Gabel ausgeführtes Lastaufnahmemittel 5 auf- und abbewegbar befestigt.

In Figur 2 ist als gattungsgemäßes deichselgeführtes Flurförderzeug ein Niederhubwagen abgebildet. Das Lastaufnahmemittel 5 des Niederhubwagens kann relativ zu dem Gehäuseteil 1 auf- und abbewegt werden. Dabei stehen zwei Hubhöhen zur Verfügung. Mit einer ersten Hubhöhe von ca. 80mm kann eine auf dem Lastaufnahmemittel 5 befindliche Palette geringfügig vom Boden abgehoben werden, während mit einer zweiten Hubhöhe von ca. 120mm der Abstand zwischen Palette und Boden vergrößert wird, so daß auch ein Fahren über Bodenunebenheiten möglich wird.

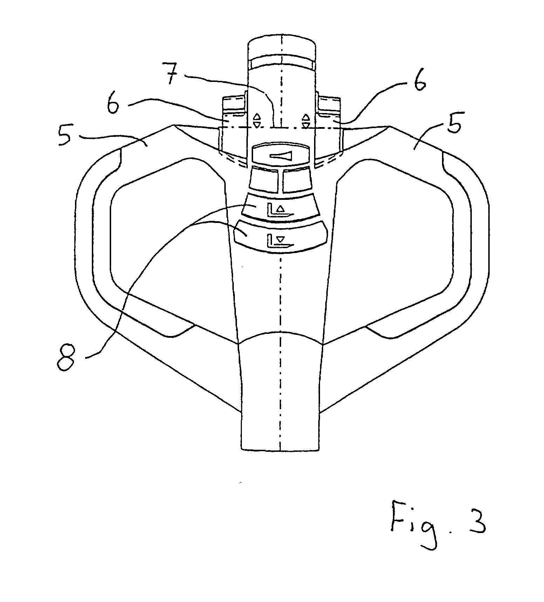

Figur 3 zeigt einen erfindungsgemäßen Deichselkopf 3, der im Bereich zweier Handgriffe 5 einen um die Drehachse 7 drehbaren Drehschalter 6 aufweist. Mit den Drehschaltern 6 kann der Fahrantrieb des Flurförderzeugs gesteuert werden. Mit den ebenfalls am Deichselkopf 3 angeordneten Bedienelementen wird das Anheben bzw. das Absenken des Lastaufnahmemittels 5 gesteuert. Die Bedienelemente sind als Tastschalter ausgeführt und bilden mit den erfindungsgemäßen zwei- bzw. mehrstufigen Schaltern jeweils eine Baueinheit. Mittels der in diesem Ausführungsbeispiel zweistufigen Tastschalter 8 werden diskrete Steuersignale erzeugt.

Solange auf die Tastschalter 8 keine Betätigungskraft ausgeübt wird, befinden sie sich in Nullstellung. Betätigt werden die Tastschalter 8 mit den Fingern einer den Handgriff 5 greifenden Hand, indem sie entgegen ein Federkraft nach unten gedrückt werden. Bei einem Hochhubwagen wird dann in einer ersten Schaltstellung ein erstes Steuersignal für eine geringe Hubgeschwindigkeit vorgegeben. Die zweite Schaltstellung entspricht einem zweiten Steuersignal für eine große Hubgeschwindigkeit.

Analog hierzu wird bei einem Niederhubwagen bei der ersten Schaltstellung ein Steuersignal für eine geringe Hubhöhe und mit der zweiten Schaltstellung ein Steuersignal für die maximale Hubhöhe erzeugt.

Die mit dem Tastschalter 8 erzeugten Steuersignale können als Eingangsgröße einer Impulssteuerung für einen elektrischen Antriebsmotor einer Hydraulikpumpe verwendet werden. Ebenso ist es möglich, mit dem Steuersignal direkt oder indirekt ein elektrisch ansteuerbares hydraulisches Proportionalventil zu steuern. Diese Möglichkeiten können sowohl für die Funktion "Anheben" wie auch für die Funktion "Absenken" verwendet werden.

Die Verwendung eines zwei- bzw. mehrstufigen Schalters ermöglicht es, trotz des geringen Schaltwegs der Tastschalter die Bewegung des Lastaufnahmemittels exakt und fehlerfrei zu bedienen.

## Patentansprüche

1. Deichselgelenktes Flurförderzeug mit einem an einer Deichsel (2) angeordneten Deichselkopf (3), welcher mindestens ein Bedienelement zur Erzeugung eines Steuersignals für die vertikale Bewegung eines Lastaufnahmemittels (5) aufweist, **dadurch gekennzeichnet, daß** das Bedienelement als Tastschalter ausgeführt ist und mit einem ein diskretes Steuersignal erzeugenden zweistufigen oder mehrstufigen Schalter in Wirkverbindung steht, wobei jeder Schaltstellung des Schalters ein bestimmter Sollwert für die Vertikalgeschwindigkeit des Lastaufnahmemittels (5) zugeordnet ist und die Vertikalgeschwindigkeit in zwei oder mehreren Stufen schaltbar ist.

2. Deichselgelenktes Flurförderzeug mit einem an einer Deichsel (2) angeordneten Deichselkopf (3), welcher mindestens ein Bedienelement zur Erzeugung eines Steuersignals für die vertikale Bewegung eines Lastaufnahmemittels (5) aufweist, **dadurch gekennzeichnet, daß** das Bedienelement mit einem ein diskretes Steuersignal erzeugenden zweistufigen oder mehrstufigen Schalter in Wirkverbindung steht, wobei jeder Schaltstellung des Schalters ein bestimmter Sollwert für die vertikale Position des Lastaufnahmemittels (5) zugeordnet ist.

3. Deichselgelenktes Flurförderzeug nach einem der Ansprüche 1 oder 2, **dadurch gekennzeichnet, daß** die verschiedenen Schalterstufen in Abhängigkeit von einer auf eine Betätigungsfläche des Bedienelements wirkenden Betätigungskraft wählbar sind.

4. Deichselgelenktes Flurförderzeug nach Anspruch 2 oder 3, **dadurch gekennzeichnet, daß** der Schalter als zweistufiger Schalter ausgeführt ist.

5. Deichselgelenktes Flurförderzeug nach einem der Ansprüche 2 bis 4, **dadurch gekennzeichnet, daß** das Bedienelement als Tastschalter (8) ausgeführt ist.

## Claims

1. Tiller-steered industrial truck having a tiller head (3) which is arranged on a tiller (2) and which has at least one operating element for producing a control signal for the vertical movement of a load pick-up means (5), **characterized in that** the operating element is designed as a momentary-contact switch and is operatively connected to a two-stage or multistage switch that produces a discrete control signal, each switching position of the switch being associated with a specific set point for the vertical speed of the load pick-up means (5), and it being possible for the vertical speed to be switched in two or more stages.

2. Tiller-steered industrial truck having a tiller head (3) which is arranged on a tiller (2) and which has at least one operating element for producing a control signal for the vertical movement of a load pick-up means (5), **characterized in that** the operating element is operatively connected to a two-stage or multistage switch that produces a discrete control signal, each switching position of the switch being associated with a specific set point for the vertical position of the load pick-up means (5).

3. Tiller-steered industrial truck according to either of Claims 1 and 2, **characterized in that** the various switch stages can be selected as a function of an actuating force acting on an actuating area of the operating element.

4. Tiller-steered industrial truck according to Claim 2 or 3, **characterized in that** the switch is designed as a two-stage switch.

5. Tiller-steered industrial truck according to one of Claims 2 to 4, **characterized in that** the operating element is designed as a momentary-contact switch (8).

## Revendications

1. Chariot de manutention avec articulation à timon muni d'une tête de timon (3) disposée sur un timon (2), laquelle présente au moins un élément de commande pour générer un signal de commande pour le déplacement vertical d'un moyen de suspension de la charge (5), **caractérisé en ce que** l'élément de commande est réalisé sous la forme d'un commutateur à poussoir et qu'il se trouve en liaison active avec un commutateur à deux niveaux ou à plusieurs niveaux qui génère un signal de commande discret, chaque position de commutation du commutateur étant associée à une valeur de consigne donnée de la vitesse verticale du moyen de suspension de la charge (5) et la vitesse verticale pouvant être commandée en deux niveaux ou plus.

2. Chariot de manutention avec articulation à timon muni d'une tête de timon (3) disposée sur un timon (2), laquelle présente au moins un élément de commande pour générer un signal de commande pour le déplacement vertical d'un moyen de suspension de la charge (5), **caractérisé en ce que** l'élément de commande se trouve en liaison active avec un commutateur à deux niveaux ou à plusieurs niveaux qui génère un signal de commande discret, chaque position de commutation du commutateur étant associée à une valeur de consigne donnée de la position verticale du moyen de suspension de la charge (5).

3. Chariot de manutention avec articulation à timon selon l'une des revendications 1 ou 2, **caractérisé en ce que** les différents niveaux de commutation peuvent être sélectionnés en fonction d'une force de commande appliquée sur une surface de commande de l'élément de commande.

4. Chariot de manutention avec articulation à timon selon l'une des revendications 2 ou 3, **caractérisé en ce que** le commutateur est réalisé sous la forme d'un commutateur à deux niveaux.

5. Chariot de manutention avec articulation à timon selon l'une des revendications 2 à 4, **caractérisé en ce que** l'élément de commande est réalisé sous la forme d'un commutateur à poussoir (8).
